# DEMANDE DE BREVET EUROPEEN

(11) **EP 1 260 342 A1**
(43) Date de publication de la demande: **27.11.2002**
(21) Numéro de dépôt: 02356083.2
(22) Date de dépôt: 02.05.2002
(51) Int. Cl.: B29C 45/17, B29C 45/40, F16D 27/01

(54) **Attelage magnétique pour commande d'éjecteurs de moules d'injection**

(30) Priorité: 18.05.2001 FR 0106620
(71) Demandeur: Walker Braillon Magnetics, 73800 Sainte Helene du Lac (FR)
(72) Inventeur: Bloomfield, Phil, 14399 Branston Burton on Trent (GB); Doyelle, Pierre, 73800 Montmelian (FR)
(74) Mandataire: Bratel, Gérard

(57) **Abrégé**

L'invention concerne les moules d'injection, utilisés dans Is presses à injecter les matières plastiques. Dans de tels moules, les éjecteurs (7) sont maintenus par une plaque d'éjection (6) montée coulissante relativement à un demi-moule (2), un élément de poussée (8, 9) étant prévu à l'arrière de la plaque d'éjection (6). Pour accoupler de façon déconnectable l'élément de poussée (8, 9) à l'extrémité (13, 14) d'un actionneur (12), il est prévu un attelage magnétique (17), comprenant une ventouse magnétique (16) à aimants permanents, liée mécaniquement à l'extrémité de l'actionneur (12). La ventouse magnétique (16) est commutable, par des moyens de commande (28, 29), entre une position « marche » dans laquelle elle attire magnétiquement la face arrière (11) de l'élément de poussée (8, 9) des éjecteurs (7), et une position « arrêt » dans laquelle l'élément de poussée n'est pas attiré.

## Description

La présente invention concerne un attelage magnétique pour commande d'éjecteurs de moules d'injection, utilisés dans les presses à injecter les matières plastiques.

Un moule d'injection se compose habituellement de deux demi-moules opposés, pouvant être rapprochés ou écartés l'un de l'autre. Le demi-moule situé du côté opposé à l'injection possède généralement un double fond, dans lequel est montée coulissante une plaque d'éjection. Cette plaque maintient fermement plusieurs tiges parallèles appelées « éjecteurs », dont la fonction est de pousser chaque pièce nouvellement injectée hors de l'empreinte usinée dans ce demi-moule, afin d'extraire la pièce du moule, lorsque ce moule est ouvert.

Pour faire fonctionner un tel dispositif d'éjection, il est donc nécessaire de créer un mouvement relatif entre le demi-moule d'une part, et la plaque d'éjection d'autre part, ce qui est habituellement réalisé par des systèmes mécaniques dits attelages, soit fixes, soit déconnectables, liant l'élément de poussée des éjecteurs à un actionneur, en particulier à un vérin.

Ces attelages mécaniques utilisent des tiges filetées, ou des conformations en « champignon » qui sont accrochées par des pinces. De tels attelages mécaniques fonctionnent en général de manière correcte, mais leur mise en oeuvre reste incommode, car l'accessibilité est restreinte, et leur réglage est très difficultueux.

De plus, lorsqu'il se produit un coincement ou un grippage des éjecteurs, l'attelage mécanique ne cède pas, ce qui entraîne des détériorations d'outillage.

Quelques propositions d'attelages magnétiques, visant à remplacer les attelages mécaniques traditionnels, ont été déjà faites, pour la commande d'éjecteurs de moules d'injection. Ainsi, le document JP 03 210956 A montre un attelage magnétique à aimants permanents disposés en ligne, qui est logé dans le volume du moule, lequel doit être spécialement aménagé. De plus, cet attelage possède un système de commutation "marche-arrêt" par déplacement en translation des aimants, commandé par la rotation d'une vis dont la manoeuvre apparaît longue et peu aisée, surtout si l'on considère la nécessité d'un outil et les difficultés d'accès. Les documents JP 05 104593 et JP 08 142135 A montrent d'autres attelages magnétiques à aimant permanent unique, sans possibilité de commutation "marche-arrêt". De plus, aucun de ces documents ne prévoit, sur les attelages magnétiques, des dispositions leur permettant d'accepter des désalignements, ou de détecter l'absence de l'élément de poussée du dispositif d'éjection, afin de mettre à l'arrêt la presse à injecter si les éjecteurs se coincent, pour éviter là aussi les détériorations. Ainsi, aucun des attelages magnétiques proposés jusqu'ici ne donne véritablement satisfaction, pour l'application ici concernée.

La présente invention vise à éviter les inconvénients des attelages mécaniques actuels, ainsi que des propositions déjà connues d'attelages magnétiques, par une solution qui simplifie l'attelage de la plaque d'éjection pour sa commande, et qui en facilite l'utilisation, tout en évitant le risque de détérioration.

A cet effet, l'invention a essentiellement pour objet un attelage pour commande d'éjecteurs de moules d'injection, ces éjecteurs étant maintenus par une plaque d'éjection montée coulissante relativement à un demi-moule, et un élément de poussée étant prévu à l'arrière de la plaque d'éjection, cet élément de poussée étant accouplé, de façon déconnectable, à l'extrémité d'un actionneur du genre vérin, par l'attelage en question, cet attelage étant selon l'invention un attelage magnétique, comprenant une ventouse magnétique à aimants permanents, liée mécaniquement à l'extrémité de l'actionneur et commutable, par des moyens de commande, entre une position « marche » dans laquelle la ventouse magnétique est apte à attirer magnétiquement la face arrière de l'élément de poussée des éjecteurs, et une position « arrêt » dans laquelle cet élément de poussée n'est pas attiré.

Ainsi, l'invention propose un attelage magnétique, utilisant comme élément principal une ventouse à aimants permanents, commutable. En position « marche », le flux magnétique issu des aimants permanents se referme par l'extérieur, en attirant l'élément de poussée des éjecteurs, l'attelage étant donc accouplé. En position « arrêt », le flux magnétique se referme par l'intérieur de la ventouse magnétique, si bien que l'élément de poussée n'est plus attiré, l'attelage étant donc désaccouplé.

On notera que, dans cet attelage magnétique, la commande de commutation marche/arrêt du dispositif de ventouse magnétique ne nécessite aucune source d'énergie extérieure, et aucun outillage spécialisé. De plus, la force magnétique d'attraction étant inférieure à la force de serrage exercée avec les attelages mécaniques, l'attelage magnétique objet de l'invention crée un effet "fusible", par son arrachement au-delà d'un certain effort de traction, ce qui évite tout dommage au dispositif lui-même ou au moule d'injection. En cas d'incident de ce genre, un détecteur chargé de vérifier la rentrée de la plaque d'éjection peut arrêter le cycle de la presse à injecter.

Toutefois, selon une forme d'exécution avantageuse de l'invention, il est prévu sur la ventouse magnétique elle-même un détecteur de présence, pour le contrôle de la présence ou de l'absence d'un élément de poussée du dispositif d'éjection, le détecteur de présence étant lié à des moyens de commande d'arrêt automatique de la presse à injecter. Ainsi, lors de la rentrée du dispositif d'éjection, l'attelage magnétique est prévu non seulement pour se désaccoupler, mais encore pour mettre automatiquement à l'arrêt la presse à injecter, dans le cas où un effort résistant trop important s'exerce sur les éjecteurs (à la suite d'un blocage ou d'un grippage, dû à un encrassement de leurs logements). La mise à l'arrêt de la presse permet alors à un opérateur d'intervenir pour procéder à un nettoyage, supprimant la cause du coincement des éjecteurs dans leurs logements, avant que ne se produise une rupture d'un éjecteur ou de l'attelage magnétique.

Dans une forme de réalisation préférée de cet attelage magnétique pour commande d'éjecteurs de moules d'injection, la ventouse magnétique possède un corps en matériau magnétiquement conducteur, comportant un évidement dans lequel est monté tournant un disque en matériau amagnétique, dans lequel est inséré un ensemble d'aimants permanents de polarités alternées, répartis autour de l'axe central du disque, le corps et le disque étant recouverts par une plaque polaire en matériau magnétiquement conducteur, pourvue d'ouvertures recevant un ensemble de pièces polaires en matériau magnétiquement conducteur, entourées chacune d'un élément en matériau amagnétique, la disposition des pièces polaires correspondant à celle des aimants permanents, des moyens de commande étant prévus pour déplacer angulairement le disque entre une position « marche », dans laquelle les aimants se situent en correspondance avec les pièces polaires, et une position "d'arrêt", dans laquelle les aimants se situent, chacun, « à cheval » sous deux pièces polaires. Les pièces polaires, isolées magnétiquement par rapport au restant de la plaque polaire, assurent ainsi, selon la position des aimants permanents situés sous ces pièces polaires, soit la conduction du flux magnétique vers l'extérieur, pour l'attraction de l'élément de poussée des éjecteurs, soit le « shuntage » magnétique des aimants, par l'intérieur de la ventouse magnétique.

Avantageusement, pour la réalisation d'une commande simple et directe de la commutation entre les positions « marche » et « arrêt », le disque avec aimants permanents de la ventouse magnétique est monté tournant dans un évidement circulaire ou annulaire du corps de cette ventouse magnétique, évidement délimité par une couronne extérieure appartenant au corps, laquelle est interrompue sur une certaine étendue angulaire, pour former une fente traversée par une tige d'une poignée de manoeuvre extérieure, liée en rotation au disque. Cette poignée permet une commutation aisée et rapide entre les positions "marche" et "arrêt".

Selon un mode de réalisation simple et compact, le disque en matériau amagnétique porte deux paires d'aimants permanents, soit deux premiers aimants diamétralement opposés et de mêmes polarités, et deux autres aimants diamétralement opposés et de polarités inverses de celles des premiers aimants, tous les aimants étant séparés les uns des autres par des intervalles angulaires réguliers de 90°, tandis que la plaque polaire porte quatre pièces polaires de disposition correspondante.

Toutefois, selon la grosseur de la ventouse magnétique, il peut aussi être envisagé que le disque en matériau amagnétique porte plus de deux paires d'aimants permanents, réparties sur un seul cercle ou sur au moins deux cercles concentriques, la plaque polaire portant des pièces polaires en même nombre et disposition que les aimants.

Selon un autre aspect de l'invention, la ventouse magnétique, pouvant être réalisée comme précédemment décrit (ce qui lui confère une forme extérieure cylindrique), prend place dans un alésage central d'un plateau de la presse à injecter. Ainsi, l'attelage magnétique de la présente invention est intégré dans le volume de la presse, et non au moule, de sorte que le moule ne nécessite aucun aménagement particulier, et que la présence de l'accouplement magnétique n'augmente pas l'encombrement total, et ne réduit pas la course des éjecteurs. De plus, la position "reculée" de l'attelage magnétique lui permet d'être accouplé aux dispositifs d'éjection de plusieurs moules d'injection montés sur la même presse, et de les commander simultanément.

Avantageusement, la ventouse magnétique de l'attelage magnétique, objet de l'invention, est liée à l'extrémité de l'actionneur du genre vérin par une articulation à rotule. Cette liaison particulière permet de transmettre les efforts d'éjection en acceptant les désalignements ou les défauts de parallélisme. Ainsi, d'une part il est garanti que la ventouse s'applique contre la face frontale du poussoir du dispositif d'éjection, et d'autre part on évite l'usure plus importante des éjecteurs qui se produirait si ces éjecteurs forçaient dans leurs logements (en cas de désalignement). On notera que, si la ventouse magnétique est de forme cylindrique, le détecteur de présence peut être commodément disposé suivant l'axe central de cette ventouse magnétique, aucun aimant ni pièce polaire ne se trouvant à cet endroit.

L'invention sera de toute façon mieux comprise à l'aide de la description qui suit, en référence au dessin schématique annexé représentant, à titre d'exemples, une forme d'exécution de cet attelage magnétique pour commande d'éjecteurs de moules d'injection :
- Figure 1 est une vue d'ensemble, en coupe, d'un attelage magnétique conforme à la présente invention, en position accouplée ;
- Figure 2 est une vue similaire à figure 1, mais illustrant la position désaccouplée de l'attelage magnétique ;
- Figure 3 est une vue en coupe passant par l'axe de la ventouse à aimants permanents de cet attelage magnétique, dans une forme de réalisation particulière ;
- Figure 4 est une vue de face de la ventouse à aimants permanents de figure 3, en position « marche » ;
- Figure 5 est une vue en coupe circulaire suivant V-V de figure 4, avec indication de l'élément attiré, en position « marche » ;
- Figure 6 est une autre vue en coupe de la ventouse à aimants permanents, suivant VI-VI de figure 3 ;
- Figure 7 est une autre vue de face de cette ventouse à aimants permanents, en position "arrêt" ;
- Figure 8 est une vue en coupe similaire à figure 3, illustrant une variante de ladite ventouse à aimants permanents.

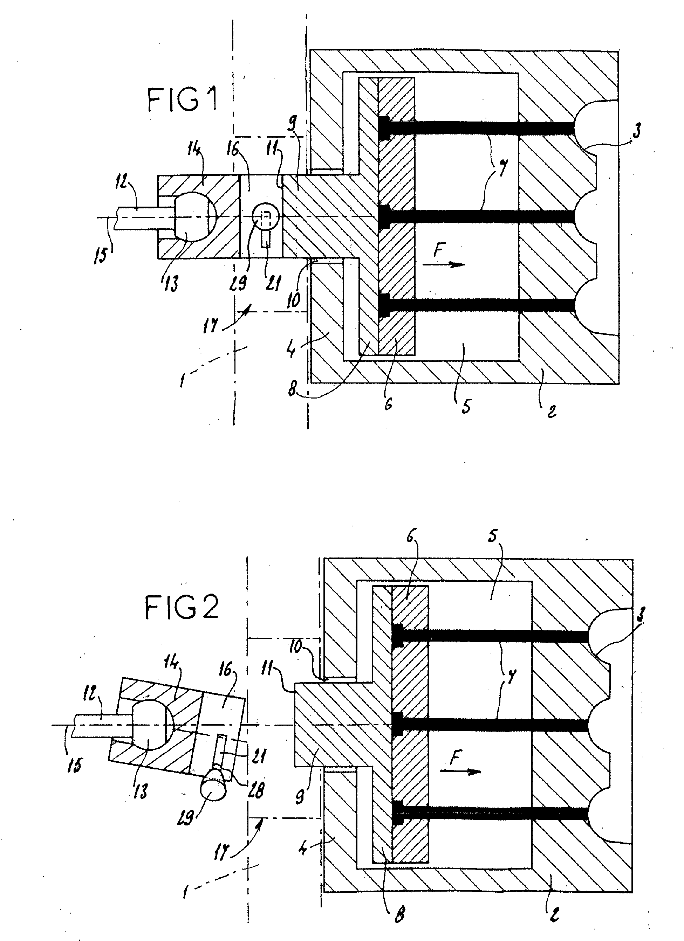

En se référant d'abord aux figures 1 et 2, il est indiqué un plateau 1 de presse à injecter les matières plastiques, sur lequel est monté un demi-moule 2, avec son empreinte 3, appartenant à un moule d'injection. Le demi-moule 2 possède un double fond 4, délimitant une cavité 5 dans laquelle est montée coulissante une plaque d'éjection 6, mobile dans la direction indiquée par une flèche F. La plaque d'éjection 6 porte plusieurs éjecteurs 7, parallèles les uns aux autres et à la direction F, les éjecteurs 7 traversant le fond du demi-moule 2 pour déboucher dans l'empreinte 3. A l'arrière de la plaque d'éjection 6 est fixée une plaque de poussée 8, qui comporte un élément central dit « poussoir » 9, dirigé vers l'arrière et engageable dans une ouverture centrale 10 du double fond 4. Le poussoir 9 possède une face frontale plane 11.

Pour commander le déplacement des éjecteurs 7, par l'intermédiaire de la plaque de poussée 8, il est prévu un vérin dont la tige 12 comporte un embout sphérique 13, recevant une rotule 14, le vérin étant disposé suivant l'axe central 15 du poussoir 9. La rotule 14 est solidaire d'une ventouse magnétique 16, qui coopère avec le poussoir 9 pour constituer un attelage magnétique, désigné dans son ensemble par le repère 17. La figure 1 montre l'attelage magnétique 17 en position accouplée, le poussoir 9 étant attiré magnétiquement par sa face frontale 11 contre la ventouse magnétique 16, de sorte que la plaque de poussée 8, donc aussi les éjecteurs 7, sont déplaçables par le mouvement de la tige de vérin 12. Au contraire, la figure 2 montre le même attelage magnétique 17 en position désaccouplée, le poussoir 9 n'étant plus attiré par la ventouse magnétique 16 et pouvant s'en séparer, ce qui permet notamment le remplacement du demi-moule 2 sur la presse à injecter. On note que la ventouse magnétique 16 prend place dans un alésage central du plateau 1 de la presse à injecter.

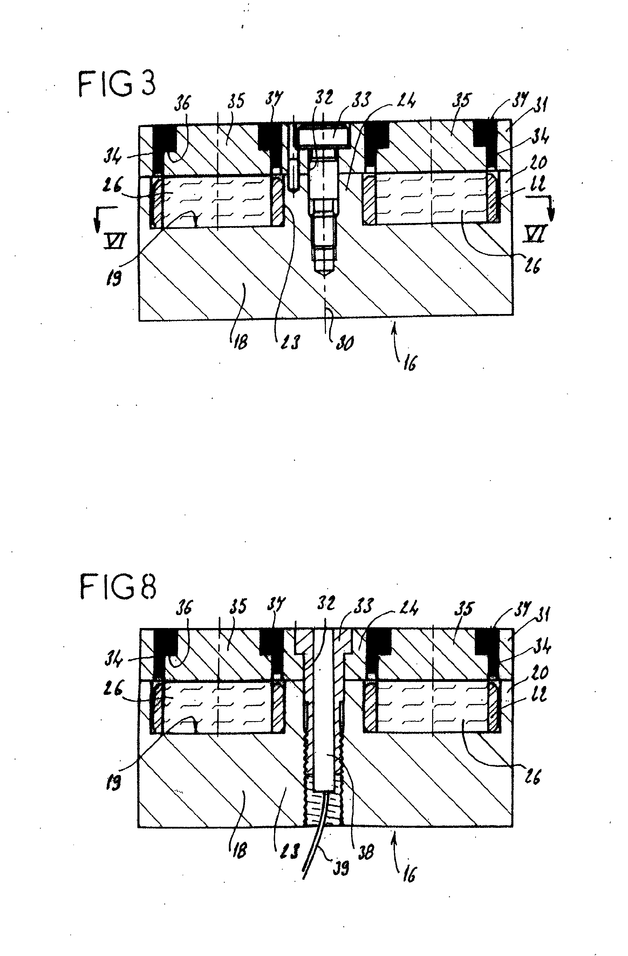

Les figures 3 à 7 montrent le détail de la ventouse magnétique 16, dans une forme de réalisation particulière.

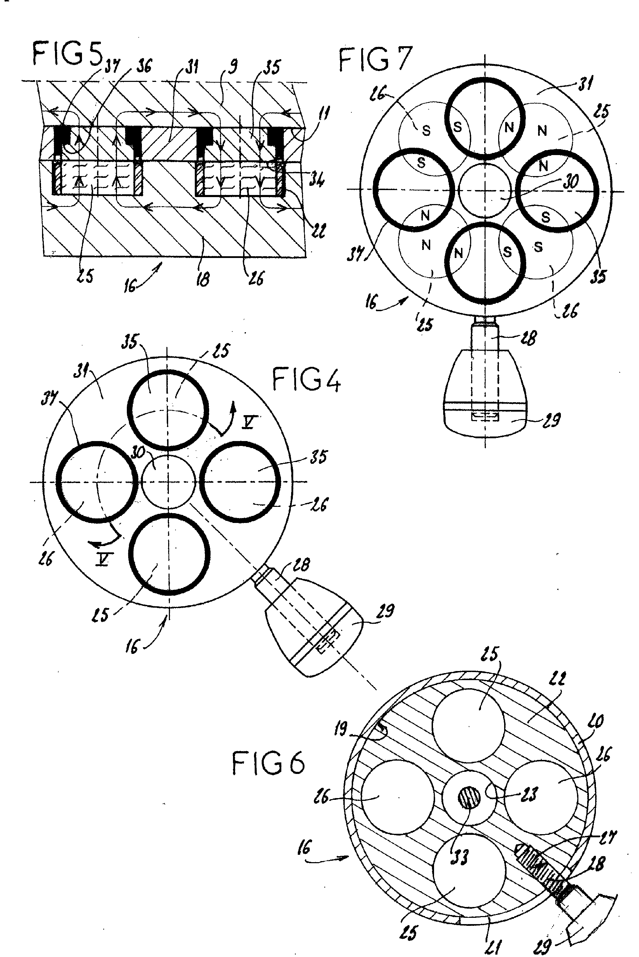

La ventouse magnétique 16 comporte un corps cylindrique 18, en acier doux, sur une face circulaire duquel est creusée une rainure annulaire 19. La rainure annulaire 19 est délimitée, extérieurement, par une couronne extérieure 20 appartenant au corps cylindrique 18, la couronne extérieure 20 étant interrompue, sur une certaine étendue angulaire, par un évidement 21 (voir en particulier figure 6).

La rainure annulaire 19 reçoit un disque 22, en matériau amagnétique, qui possède en son centre un alésage 23 en correspondance avec un bossage central 24 du corps 18, bossage qui délimite intérieurement la rainure annulaire 19. Le disque 22 comporte aussi, dans l'exemple illustré, quatre alésages excentrés qui reçoivent chacun un aimant permanent 25 ou 26. Les aimants comprennent ainsi deux premiers aimants 25, diamétralement opposés, de mêmes polarités, et deux autres aimants 26, diamétralement opposés, de polarités inverses de celles des premiers aimants 25. Ces aimants 25 et 26 sont, par exemple, des aimants de type néodyme - fer - bore. Ils sont séparés les uns des autres par des intervalles angulaires réguliers de 90°.

Dans un intervalle situé entre deux aimants 25 et 26 consécutifs, le disque 22 comporte un trou taraudé 27, percé en direction radiale à partir de sa périphérie. Le trou 27 reçoit une tige filetée 28, qui traverse la fente formée par l'évidement 21 de la couronne extérieure 20 du corps 18, et qui porte, à son extrémité extérieure, une poignée de manoeuvre 29.

Le disque 22 étant monté tournant dans la rainure annulaire 19 du corps cylindrique 18, autour de l'axe central 30 de ce corps 18, le maniement de la poignée de manoeuvre 29 permet de commander la rotation du disque 22 relativement au corps 18, entre deux positions angulaires séparées par un angle de 45°.

Le corps cylindrique 18 et le disque 22 sont recouverts par une plaque polaire 31, en forme de disque, réalisée en acier doux. La plaque polaire 31 possède un perçage central 32, qui reçoit ici une vis centrale 33 réalisant son assemblage au corps 18. La plaque polaire 31 s'applique ainsi contre la couronne extérieure 20 et contre le bossage central 24 du corps 18, en enfermant le disque 22 - voir figure 3.

La plaque polaire 31 est aussi percée de quatre ouvertures circulaires excentrées 34, de même disposition et de même diamètre que les alésages du disque 22 qui reçoivent les aimants 25 et 26. Les ouvertures 34 de la plaque polaire 31 reçoivent, respectivement, quatre pièces polaires circulaires 35 en acier doux, à bord épaulé 36, entourées chacune d'une bague 37, en matériau amagnétique, venant en contact avec le bord de l'ouverture correspondante de la plaque 31. Ainsi, les pièces polaires 35 sont toutes isolées magnétiquement de la plaque 31.

Lorsque les aimants 25 et 26, portés par le disque 22, se situent exactement sous les pièces polaires 35 de la plaque polaire 31 (position illustrée par les figures 3 à 6), le flux magnétique sortant d'un aimant 25, ou rentrant dans un aimant 26, passe au travers des pièces polaires 35 situées en correspondance avec ces aimants. Si la face frontale 11 du poussoir 9 appartenant au dispositif d'éjection est rapprochée de la plaque polaire 31, ce flux magnétique, sortant d'un aimant 25, traverse la pièce polaire 35 correspondante, puis passe dans le poussoir 9, traverse une autre pièce polaire 35 et revient dans un aimant 26 de polarité inverse du premier. A l'intérieur du corps 18 de la ventouse magnétique 16, le flux magnétique ressort de l'aimant 26, et revient dans le premier aimant 25 (voir la coupe circulaire de la figure 5). Ainsi, la ventouse magnétique 16 occupe une position « marche », dans laquelle le flux magnétique passe dans le poussoir 9 du dispositif d'éjection, ce poussoir 9 étant ainsi attiré magnétiquement contre la plaque polaire 31 de la ventouse magnétique 16. L'attelage magnétique 17 est donc accouplé, permettant à la tige de vérin 12 de déplacer les éjecteurs 7 (voir aussi figure 1). On notera que la rotule 14 permet d'accepter les désalignements, la ventouse magnétique 16 venant, dans tous les cas, s'appliquer contre la face frontale du poussoir 9.

Par action sur la poignée 29, le disque 22 peut être tourné autour de l'axe 30, selon un angle de rotation de 45°, pour être amené dans une autre position angulaire montrée sur la figure 7. Dans cette orientation différente du disque 22, les aimants 25 et 26 se situent, chacun, « à cheval » sous deux pièces polaires 35 consécutives. Chaque pièce polaire 35 se trouve alors induite par des surfaces d'aimants 25 et 26, l'une Nord, et l'autre Sud, et de même force. Les pièces polaires 35 assurent ainsi la fermeture du flux magnétique, par l'intérieur de la ventouse magnétique 16; elles sont donc neutres, du point de vue magnétique. Il en est de même pour le restant de la plaque polaire 31 qui, recevant des aimants 25 et 26 autant de flux Nord que de flux Sud, devient elle aussi magnétiquement neutre. La ventouse magnétique 16 se trouve ainsi en position « arrêt », dans laquelle le flux magnétique se referme entièrement par l'intérieur de cette ventouse 16, si bien que le poussoir 9 du dispositif d'éjection n'est plus attiré. L'attelage magnétique 17 est donc désaccouplé, la tige de vérin 12 n'étant plus liée aux éjecteurs 7 (voir aussi figure 2).

La figure 8, sur laquelle les éléments correspondant à ceux précédemment décrits sont désignés par les mêmes références, montre une variante de la ventouse magnétique 16. Dans cette variante, la vis centrale 33 est évidée suivant son axe, et elle reçoit dans son évidement central un capteur inductif 38, constituant un détecteur de présence qui permet de contrôler la présence ou l'absence du poussoir 9 du dispositif d'éjection. Grâce à ce détecteur, qui envoie son signal par un fil 39, la presse à injecter peut être automatiquement arrêtée, en cas d'effort résistant excessif sur les éjecteurs 7, ceci pour éviter toute rupture de ces éjecteurs ou de l'attelage magnétique 17.

L'on ne s'éloignerait pas du cadre de l'invention, telle que définie dans les revendications annexées :
- en multipliant le nombre des aimants et des pièces polaires de la ventouse magnétique ;
- en modifiant la structure des moyens de commande de passage de la position « marche » à la position « arrêt » ;
- en utilisant le même attelage magnétique avec des moules d'injection dont le dispositif d'éjection est de structure différente, le nombre des éjecteurs étant naturellement variable ;
- en réalisant, avec cet attelage magnétique, une liaison entre un actionneur et les dispositifs d'éjection appartenant à plusieurs moules placés sur une même presse à injecter.

## Revendications

1. Attelage pour commande d'éjecteurs de moules d'injection, utilisés dans les presses à injecter les matières plastiques, les éjecteurs (7) étant maintenus par une plaque d'éjection (6) montée coulissante relativement à un demi-moule (2), et un élément de poussée (8, 9) étant prévu à l'arrière de la plaque d'éjection (6), cet élément de poussée (8, 9) étant accouplé, de façon déconnectable, à l'extrémité (13, 14) d'un actionneur (12) du genre vérin, par l'attelage en question, **caractérisé en ce que** cet attelage est un attelage magnétique (17), comprenant une ventouse magnétique (16) à aimants permanents (25, 26), liée mécaniquement à l'extrémité (13, 14) de l'actionneur (12) et commutable, par des moyens de commande (28, 29), entre une position « marche » dans laquelle la ventouse magnétique (16) est apte à attirer magnétiquement la face arrière (11) de l'élément de poussée (8, 9) des éjecteurs (7), et une position « arrêt » dans laquelle cet élément de poussée (8, 9) n'est pas attiré.

2. Attelage magnétique pour commande d'éjecteurs de moules d'injection selon la revendication 1, **caractérisé en ce que** la ventouse magnétique (16) possède un corps (18) en matériau magnétiquement conducteur, comportant un évidement (19) dans lequel est monté tournant un disque (22) en matériau amagnétique, dans lequel est inséré un ensemble d'aimants permanents (25, 26) de polarités alternées, répartis autour de l'axe central (30) du disque (22), le corps (18) et le disque (22) étant recouverts par une plaque polaire (31) en matériau magnétiquement conducteur, pourvue d'ouvertures (34) recevant un ensemble de pièces polaires (35) en matériau magnétiquement conducteur, entourées chacune d'un élément (37) en matériau amagnétique, la disposition des pièces polaires (35) correspondant à celle des aimants permanents (25, 26), des moyens de commande (28, 29) étant prévus pour déplacer angulairement le disque (22) entre une position « marche », dans laquelle les aimants (25, 26) se situent en correspondance avec les pièces polaires (35), et une position « arrêt », dans laquelle les aimants (25, 26) se situent, chacun, « à cheval » sous deux pièces polaires (35).

3. Attelage magnétique pour commande d'éjecteurs de moules d'injection, selon la revendication 2, **caractérisé en ce que** le disque (22) avec aimants permanents (25, 26) de la ventouse magnétique (16) est monté tournant dans un évidement circulaire ou annulaire (19) du corps (18) de cette ventouse magnétique (16), évidement (19) délimité par une couronne extérieure (20), appartenant au corps (18), laquelle est interrompue sur une certaine étendue angulaire, pour former une fente (21) traversée par une tige (28) d'une poignée de manoeuvre extérieure (29), liée en rotation au disque (22).

4. Attelage magnétique pour commande d'éjecteurs de moules d'injection, selon la revendication 2 ou 3, **caractérisé en ce que** le disque (22) en matériau amagnétique porte deux paires d'aimants permanents (25, 26), soit deux premiers aimants (25) diamétralement opposés et de mêmes polarités, et deux autres aimants (26) diamétralement opposés et de polarités inverses de celles des premiers aimants (25), tous les aimants (25, 26) étant séparés les uns des autres par des intervalles angulaires réguliers de 90°, tandis que la plaque polaire (31) porte quatre pièces polaires (35) de disposition correspondante.

5. Attelage magnétique pour commande d'éjecteurs de moules d'injection, selon la revendications 2 ou 3, **caractérisé en ce que** le disque (22) en matériau amagnétique porte plus de deux paires d'aimants permanents, réparties sur un seul cercle ou sur au moins deux cercles concentriques, la plaque polaire (31) portant des pièces polaires en même nombre et disposition que les aimants.

6. Attelage magnétique pour commande d'éjecteurs de moules d'injection, selon l'une quelconque des revendications 1 à 5, **caractérisé en ce que** la ventouse magnétique (16) prend place dans un alésage central d'un plateau (1) de la presse à injecter.

7. Attelage magnétique pour commande d'éjecteurs de moules d'injection, selon l'une quelconque des revendications 1 à 6, **caractérisé en ce que** la ventouse magnétique (16) est liée à l'extrémité de l'actionneur (12) du genre vérin par une articulation à rotule (13, 14).

8. Attelage magnétique pour commande d'éjecteurs de moules d'injection, selon l'une quelconque des revendications 1 à 7, **caractérisé en ce qu'**il est prévu, sur la ventouse magnétique (16), un détecteur de présence (38) pour le contrôle de la présence de l'absence d'un élément de poussée (9) du dispositif d'éjection, le détecteur de présence (38) étant lié (en 39) à des moyens de commande d'arrêt automatique de la presse à injecter.

9. Attelage magnétique selon l'ensemble des revendications 2 à 8, **caractérisé en ce que** le détecteur de présence (38) est disposé suivant l'axe central de la ventouse magnétique (16).
